# EUROPEAN PATENT SPECIFICATION

(11) **EP 0 404 893 B1**
(45) Date of publication and mention of the grant of the patent: **22.02.1995**
(21) Application number: 89913139.5
(22) Date of filing: 26.10.1989
(51) Int. Cl.: G06F 3/14, G06F 3/033

(54) **ELECTRONIC DOCUMENT DISPLAY WITH ANNOTATION ROUTINES AND MULTIPLE WINDOWS**
ELEKTRONISCHE DOKUMENTANZEIGE MIT AUFZEICHNUNGSROUTINEN UND MEHREREN FENSTERN
AFFICHAGE ELECTRONIQUE DE DOCUMENT A PROGRAMME D'ANNOTATION ET FENETRES MULTIPLES

(30) Priority: 01.11.1988 US 265686
(43) Date of publication of application: 02.01.1991
(73) Proprietor: WANG LABORATORIES, INC., Lowell, MA 01851 (US)
(72) Inventor: LEVINE, Stephen, R., North Andover, MA 01845 (US); ABRAMS, Kenneth, H., Sudbury, MA 01776 (US); BURNS, Raymond, S., North Andover, MA 01845 (US); HARUI, Alex, J., Derry, NH 03038 (US); LAKNESS, David, R., Westford, MA 01886 (US); RUDIS, Ronald, F., North Andover, MA 01845 (US); COLLEY, Richard, E., Chelmsford, MA 01824 (US)
(74) Representative: Behrens, Dieter, Dr.-Ing.
(86) International application number: US8904790
(87) International publication number: WO9005333

(56) References cited:
- JP-A-59 114 631
- JP-A-59 125 425
- JP-A-60 218 128
- US-A- 4 633 436
- IBM TECHNICAL DISCLOSURE BULLETIN. vol. 27, no. 10B, March 1985, NEW YORK USpage 5966 'Creating a footnote for a table or graphic object'
- PATENT ABSTRACTS OF JAPAN vol. 10, no. 80 (P-441)29 March 1986
- 'Macintosh System Software: User's Guide, Version 6.0' 1988 , APPLE COMPUTER
- INC. , CUPERTINO, CA
- G. WILLIAMS, "The Apple Macintosh Computer: Mouse-Window-Desktop Technology arrives for under S2500. BYTE Publications, published February 1984, see pages 30 - 54, particularly pages 33 - 48.
- D. WESTON, "The Complete Book of Macintosh Assembly Language Programming", published 1987 by Scott, Foresman and Co., Il, pages 27-147, especially pages 34 - 73.
- IBM Technical Disclosure Bulletin, Vol. 28 No. 4, Sept 1985, "Method for Creating Annotation Data", pages 1623-1628
- "Macintosh System Software: User's Guide, Version 6.0", published 1988 by Apple Computer, Inc., Cupertino, CA, pages 58 - 69.

## Description

### Background of the Invention

In the business environment of today, many tasks are now automated by computers. For instance, a word processor enables the reorganising and rewriting of documents without the retyping known in the past. In addition, various documents may be organized and stored by a computer filing system which allows retrieval by name, by chronological or alphabetical order, or by other user-desired identification. Another example is a mail system on messages to be sent to and from user of the network. Also, a phone system may be connected to a mail system which in term enables phone messages to be stored and later forwarded to users. These and other computer devices enable various daily office tasks to be accomplished more quickly an more efficiently.

However, most computer devices require the user to be computer literate and to learn commands to direct the computer to perform a certain task. In more recent computer developments, menus (a series of commands from which to choose) are displayed to the user at appropriate decision junctures during the use of a computer device. The menus are considered to make the computer device more "user friendly". Generally the choices on a menu are descriptive phrases written in terms which are more common to our everyday language rather than in a coded or technical computer language. Even so, the descriptive phrases may not initially have meaning, or at least the proper meaning, to a first-time user or a user who is not computer literate. Thus, many office personnel do not make use of computer devices because of the time and complexity required to learn to operate these devices.

IBM TECHNICAL DISCLOSURE BULLETIN, vol. 27, no. 10B, March 1985, New York, U.S.A, pg. 5966, "Creating a Footnote for a Table or a Graphic Object" is an example of a system which uses a menu, also referred to as a displayed command bar, to allow a user to reference graphical data and data contained in a table with a footnote in a manner similar to creating a footnote for data contained as text.

BYTE Publications, Feb. 1984, pp. 30-54, G. Williams, "The Apple Macintosh Computer: Mouse-Window-Desktop Technology Arrives for Under $ 2500" and "Macintosh System Software: User's Guide, Version 6.0" 1988, Apple Computer, Inc., Cupertino, CA show a desktop-computer equipped with a mouse which is capable of displaying text or graphical images in one or more windows and which allows commands and data to be entered via a keyboard or mouse through the aid of menus.

PATENT ABSTRACTS OF JAPAN, JP 60 218 128 (Fujitsu K.K) Oct. 31, 1985, teaches a system which detects the coordinate position of a pen used to enter input via a tablet.

Accordingly, there is a need to make computer devices, and particularly those for office use, more initially "user friendly" or readily useable especially to first-time and computer illiterate users.

### Summary of the Invention

The present application, as set forth in claims 1 and 8, discloses a computer device which is a degree "friendlier" than the menu driven computer devices of prior art. The computer device employs an electronic stylus and an electronic tablet which emulate a pencil and desk pad of paper used by the common business person. The electronic stylus and tablet are associated with the terminal of a digital processing system which has a monitor screen for displaying the strokes input by the electronic stylus and those input by a keyboard. An audio input/output assembly is alternatively connected to the terminal to provide voiced or other audio input to the digital processing system.

User interaction with the processing sytem in that device is through movement of the stylus with respect to the tablet. During use of the stylus two major views are viewed on the monitor screen, a desk view and an annotation session view. The desk view emulates a user's desk and pieces of paper which are stacked on and moved about his desk. In a preferred emodiment the desk view shows a stamp which is a reduced or miniaturized image of an actual page of each document presently on the user system desk or computer work area. Each stamp serves as a unique direct pictorial representation of a certain document on the user system desk as opposed to an indirect indication such as a prefabricated standard icon which is used for all documents of a certain type and which identifies as a specific document only by a name or title associated with the icon.

The annotation session view provides a full screen size view of the document to be annotated or created by data input through the stylus, keyboard and/or audio input/output assembly. The document to be annotated may be chosen in three different manners. In one way, the document may be chosen from a program being currently run by the operating system. The user simply places one end of the stylus within a predetermined proximity of the surface of the tablet. When such proximity is sensed, the currently running program is temporarily stopped, preferably by a microprocessor interrupt, the view from that program being displayed at that time becomes the document to be annotated. In preparation for annotation if the screen is currently in a text mode, as opposed to a bit map mode, the data processing system changes the screen to a bit map or graphics mode. Text is converted to graphics by a character generation scheme. Also the dark background with light print of the text mode is reversed to a light background with dark print to more effectively simulate print on paper. Once prepared for annotation, the document may be annotated with visual annotations input through the stylus and/or keyboard and/or annotated with audio annotations input through the audio input/output assembly.

The present invention enables a document to be chosen from a program which supports the running of multiple windows. In particular, the multiple window support program manages a database of images and enables user querying of the database for desired images. The search results from a user query of the database provides a display of an image in a dedicated image window on the monitor screen. Within that window the user is able to view, copy, print or send the image displayed therein. The program enables a mazimum number, for example 3, of image windows to be displayed on the monitor screen at one time. Typically the image windows overlap one another.

In accordance with the present invention, during the running of this program, if the user touches an end of the stylus to the tablet, the full screen view of the overlapping windows is captured and forms an annotatable document. Each captured image/document is represented by a stamp on the user's system desk. In the preferred embodiment the stamps of these documents are initially found in the In-box on the user's system desk.

Subsequent manipulation of the stamps and annotation of the corresponding documents may then be performed. In addition, the processing system enables a user to store documents from the user's system desk into a desired database, for example the database of images managed by the multiple window support program. Subsequent retrieval of a desired document from a database is also enabled. This is accomplished through a file cabinet icon illustrated on the user's system desk. By the user selecting the icon with the stylus, a search routine is initiated. The search routine provides a search form in which the user specifies the desired document from a particular database to be retrieved. The search routine performs a search with the criteria inserted on the search form by the user with stylus and/or keyboard input. The search results are displayed for user selection.

Document storage is provided in a similar manner. The user positions a stamp of a desired document next to or on the file cabinet icon through operations of the stylus on a tablet. Upon positioning of the stamp on the file cabinet icon, the processing system provides a store form on the user system desk. The user completes the store form by inserting with the stylus and/or keyboard the name of the image to be stored, the desired database in which the image is to be stored, and other pertinent identification. Upon completion of the store form, the user selects a menu selection to store the indicated image in the indicated database. The processing system responds to such actions of the user by storing the specified image in the specified database and resuming display of the user's system desk with the stamp of the desired document in its initial position before it was moved adjacent to the file cabinet icon.

### Brief Description of the Drawings

The foregoing and other objects, features and advantages of the invention will be apparent from the following more particular description of illustrative embodiments of the invention, as illustrated in the accompanying drawings in which like referenced characters refere to the same parts throughout the different views. The drawings are not necessarily to scale, emphasis instead being placed upon illustrating principles of the invention.

Figure 1 is a schematic view of a data processing system which embodies the present invention.

Figure 2 is an illustration of view displayed during the running of a multiwindow support program.

Figure 3 is an illustration of the desk view employed in the data processing system of Figure 1 in which the windows of the program in Figure 2 have been individually captured as annotatable documents.

Figure 4a-4b illustrate a sequence of views displayed from invocation of a document filing operation from the desk view in the data processing system of Figure 1.

Figures 5a-5b illustrates a sequence of views displayed from invocation of a document retrieve operation from the desk view of the data processing system of Figure 1.

### Detailed Description of the Preferred Embodiment

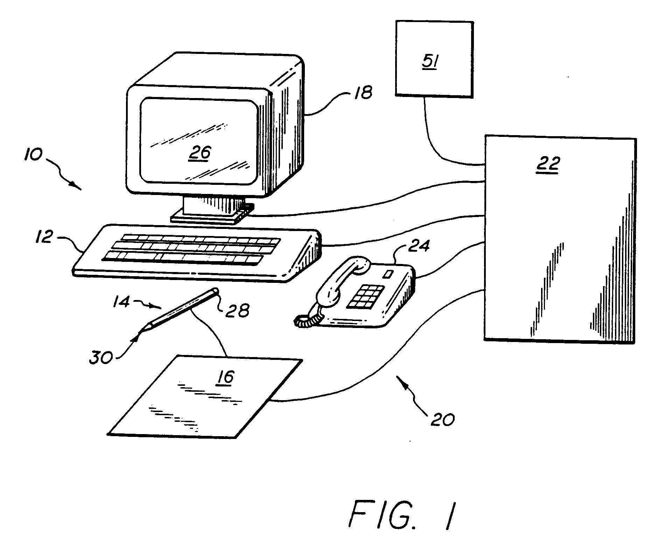

A data processing system which embodies the present invention is illustrated in Figure 1. The system 20 includes a computer terminal 10 with a keyboard 12 and a display unit 18, a two-ended electronic stylus 14 and an electronic tablet 16, all of which are connected to and driven by a digital processor 22. Digital processor 22 may be of the multitask type but a single task type is assumed in the description of the preferred embodiment. Preferably an audio assembly 24 having input and output ports such as a telephone set, is also connected to the terminal 10 for combining voice with visual annotations input through the stylus 14 and keyboard 12.

The stylus 14 is used on an upper planar surface of the tablet 16 to perform certain tasks such as writing a message and correcting a part thereof, creating a new document or retrieving and annotating an existing document. The actions of the stylus 14 on the surface of the tablet 16 are displayed on the display unit 18 and the positions on the tablet have a one to one correspondence with the view 26 displayed on the display unit 18. Thus, as the user applies the stylus 14 to the tablet surface, an image representation of what the user is doing with the stylus is provided in the view 26 of display unit 18. The working elements of display unit 18, stylus 14 and tablet 16 are described in detail in the parent application and are only summarized here after as necessary.

The two-ended stylus 14 operates from either end, the writing tip end 30 or the eraser end 28. The writing tip end 30 and the eraser end 28 are alternatively driven by a tablet processor. When one end is moved into and sensed in proximity (about 2 cm or less) of the tablet surface, then just that end is driven. When the writing tip end 30 is in proximity of the tablet surface it alone is driven in response to four different manners of operation to provide four different effects. A "touch and lift" operation of the writing tip end 30 or the eraser end 28 is used for selecting a displayed item. Preferably, once the stylus and 28, 30 makes contact with the tablet surface, the "touch" part of the operation is defined but the user must lift the stylus end 28, 30 from the tablet surface within the succeeding second or so to define the "lift" portion of the operation. A "touch and move" operation enables the user to move a displayed item anywhere in view 26 of display unit 18. The operation is invoked upon the user placing a stylus end 30, 28 on the tablet surface and moving the stylus end 30, 28 while maintaining it in contact with the tablet surface for more than a preset number of pixels, for example about four pixels. The third manner of operation is writing with the writing tip end 28 of the stylus 14 to insert markings on a chosen displayed document. The fourth manner of operation is erasing with the eraser end 28 to remove desired parts of markings which have been made by the writing tip end 30 within the same session of writing/erasing on a chosen displayed item.

Generally, the data processing system 20 provides two environments in which annotation and manipulation of documents is performed. One environment is best described as a computer work area called the user system desk which contains images of all the documents in the user's possession. The second environment provides a view of a single selected document including a new document and enables annotation or creation of that document with stylus-written/erased, keyboard-typed and audio inputted annotations. The second environment is referred to as the "annotator" and may be invoked from any view on display unit 18 at any time. In particular, the annotator may be invoked during any working program by the user placing an end of the stylus 14 in proximity of the tablet surface. This causes the processor 22 to capture the screen view currently being displayed and generate from the captured screen view an annotation-ready document.

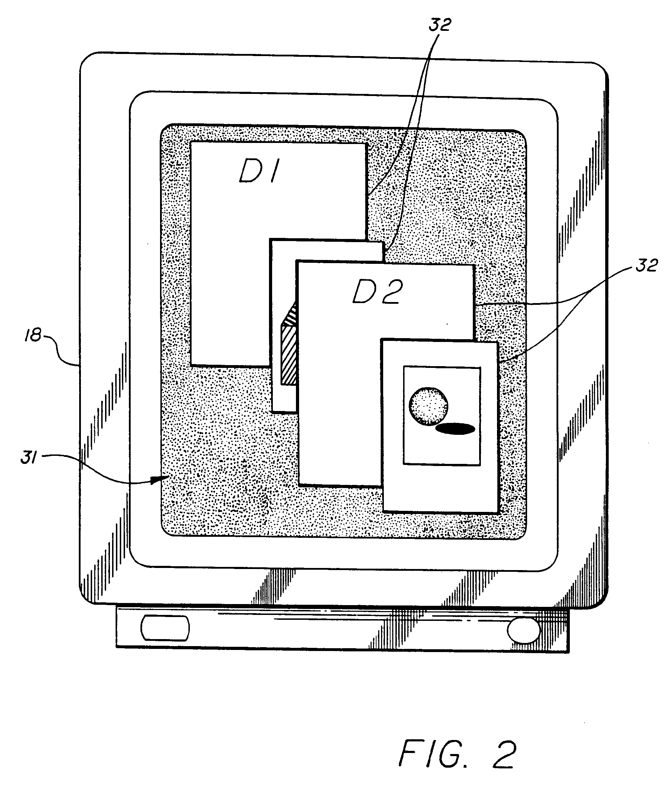

However, in the case where a multi-window support program is running which provides various windows 32 (Figure 2) for displaying images selected from a database of images, invocation of the annotator is not immediate but through the user's system desk. During such a multi-window support program a user is able to query the image database for desired images. In response to a query, the program performs a search in the database and provides results of the search in various windows 32 on the screen of display unit 18. Each window 32 holds an image requested by the user. In the case of more than one window 32 displayed at the same time, the program overlaps the image windows 32 as shown in Figure 2.

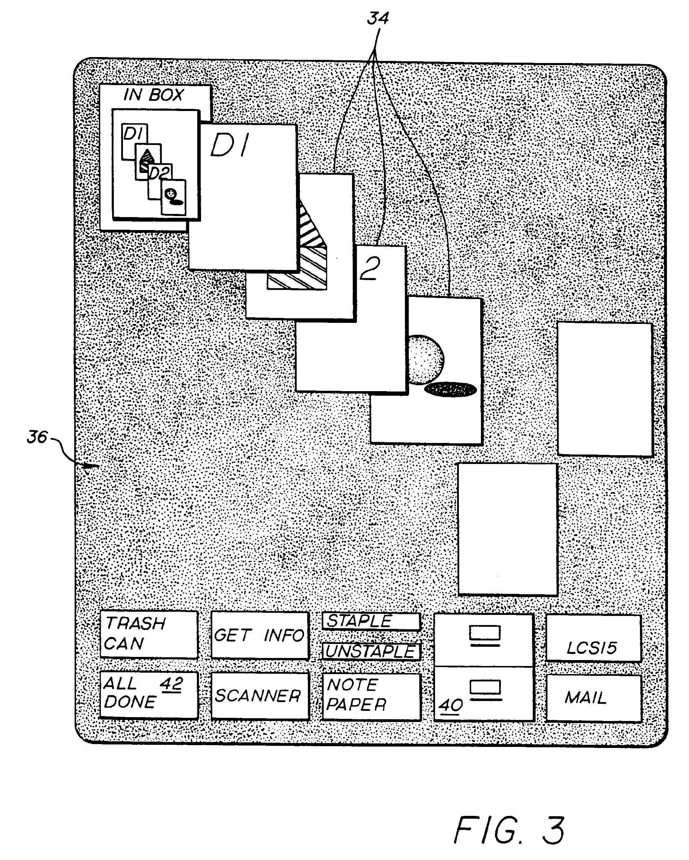

To invoke the annotator at this time, the user places the writing tip end 30 or eraser end 28 of the stylus 14 in proximity of the surface of tablet 16. The processor 22 responds to such positioning of the stylus 14 by causing each window 32 currently on display unit 18 to become an annotatable document represented by an associated stamp 34 on the user's system desk 36 as shown in Figure 3.

After effectively capturing each window and the composite multi-window screen view to establish annotatable documents in the above manner, the user's system desk 36 is displayed through display unit 18 as shown in Figure 3. Each document generated from the multi-window screen view 31 (Figure 2) is represented by a corresponding stamp 34. Preferably, the stamps 34 are initially stacked in the In-box 38 in the display of the user's system desk 36. the user is able to remove each document stamp 34 from the In-box by the "touch and move" manner of operation of the stylus 14 on the tablet 16. Once the user has removed each stamp 34 from the In-box, the user may reposition the stamps as desired on the user's system desk 36 by multiple operation of the stylus 14 in the touch and move manner. Upon the user's selection of a stamp 34 by the user "touching and lifting" the stylus 14 end 28, 30 on the tablet position corresponding to the desk view position of the stamp 34, the processor 22 drives display unit 18 to exhibit a full screen size view of the document represented by the selected stamp 34, and thus invokes the annotator for the displayed document.

Subsequent annotation and returning to the user's system desk 36 or the previously running working program is performed for example through a pop-up menu.

In addition to the various stamps 34 of documents, the user's system desk 36 (Figure 3) provides indications of various depositories for documents and various operations of processor 22 that the user can elect to perform from the user system desk. One depository as introduced above is labelled the "In-box" and is used for receiving for all documents created by the user and any mail sent to the user. The other depositories and operations indicated on the user system desk 36 and manipulation thereof are described in detail in the parent application, with the exception of a file cabinet 40.

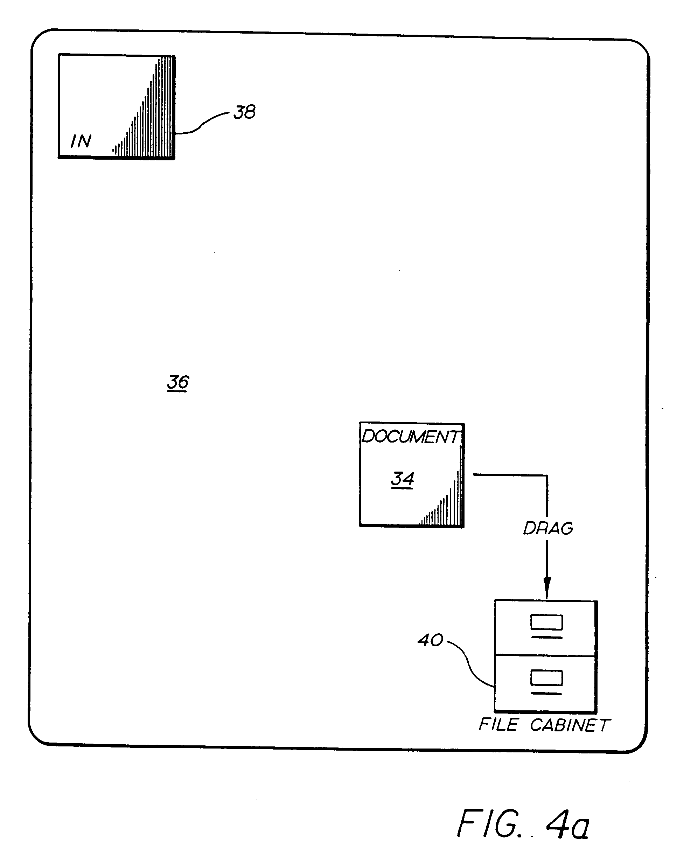

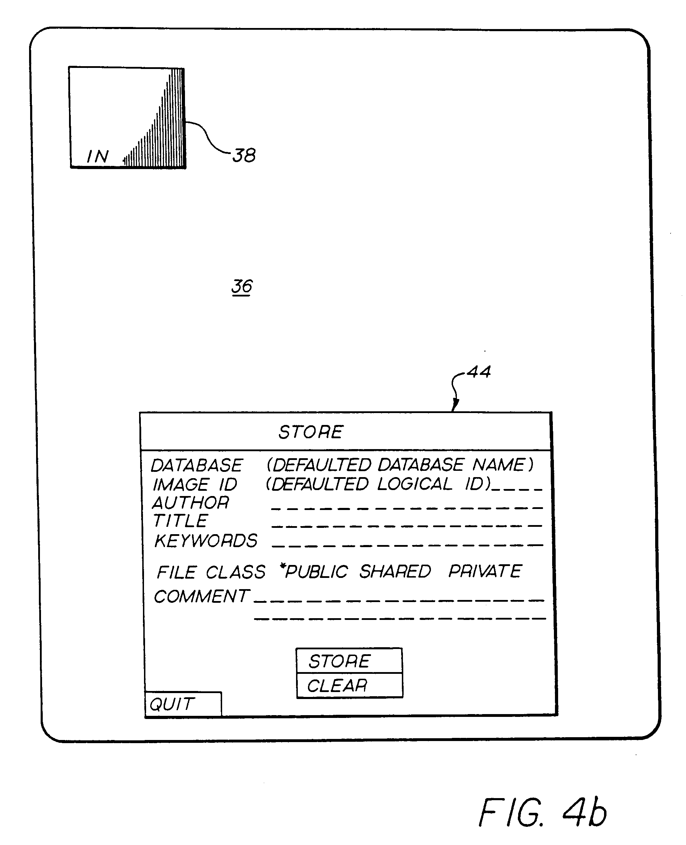

The operation of the file cabinet 40 icon is illustrated in Figures 4a-5d. The file cabinet 40 provides a user interface for exporting an annotated document from the user system desk 36 into a desired database, for example the database of the multi-window support program, and for importing a document from a desired database onto the user system desk 36. To export or file a single document from the user's system desk 36, the user places on end of the stylus on the tablet corresponding to the position of the stamp 34 of the desired document displayed in the screen view of the user's system desk 36. After positioning the stylus in such a manner, the user maintains contact of the stylus end with the tablet and moves the stylus across the tablet to a desired position which corresponds to the screen position of the file cabinet icon 40. During such movement, the processor displays the desired document 34 stamp being moved from an initial position to a position adjacent or overlapping the file cabinet icon 40 as illustrated in Figure 4a. Upon the stamp 34 making contact with the file cabinet icon 40, the processor 22 displays a "store form" 44 in the screen view through the display unit 18 as shown in Figure 4b.

The user completes the store form 44 using the writing tip end 30 of the stylus and the keyboard 12. In the field of the store form 44 labelled "database" the user types and/or writes the name of the desired database in which the document of the selected stamp 34 is to be stored, for example, the database name of the multi-window support program. The "Image Id" field is completed by insertion of the logical identification name of the desired document. The logical identification name corresponds to a superfile identification of the desired document. The database and image id fields may be automatically completed by the processor 22 with a default database name and the logical identification name corresponding to the selected stamp 34 respectively. The user then completes the fields designated author, title and keywords by typing or writing in the respective information. The words inserted into the "key words" field are used during a subsequent search for the document in the selected database. The "File Class" field is completed by the user selecting the type of access allowed to the document. Preferable, the types of access or classes available are public, shared or private. Other user comments may be inserted in the "Comment" field.

During the completing of the store form 44, the user may erase desired stylus markings or portions thereof by operating the eraser end 28 of the stylus on the tablet positions corresponding to the desired displayed areas. To clear user inserted information from all of the fields of store form 44, the user slects the area labelled "clear" in form 44, with the touch and lift manner of operation of one end of the stylus 14 on the tablet position corresponding to the position of the labelled area in the screen view. Upon the eraser lifting the stylus end, the processor 22 effectively erases all the information that the user inserted into the various fields of the store form 44. If the user decides not to store the document into the database the menu selection "quit" can be chosen by a touch and lift operation of the stylus 14 on the position of the tablet 16 which corresponds to the position of the pertinent menu selection in the screen view of Figure 4b. Selection of the "quit" menu pick returns the user to the desk view (Figure 3a) with the stamp 34 of the desired document in its initial position before being moved to file cabinet 40.

After completing the store form 44, user selection of the "store" menu pick causes the processor to store a copy of the document represented by the selected stamp 34 in the designated database, for example the database of the multi-window support program. The screen view of the user's system desk 36 is then redisplayed with the stamp 34 of the selected document repositioned in its initial position.

In a preferred embodiment upon selection of the "store" menu pick, the processor 22 copies the actual image data associated with the selected document stamp 34 and passes the image data and its associated parameter block to a network communication manager which in turn passes the image and parameter block to a COBOL application that stores the image data onto a magnetic or optical disk and updates two tables which support the target database (i.e. the database of the multi-window support program). One of the tables is a locator table which provides the relationship between the physical identification on optical disk of an image to its logical identification which is supplied by the user in the "Image Id" field. The second table is the file cabinet table which relates the user designated author, keywords and logical identification to the image data for each image filed through the file cabinet icon 40. There is only one file cabinet table and it is unique to system 20 (Figure 1).

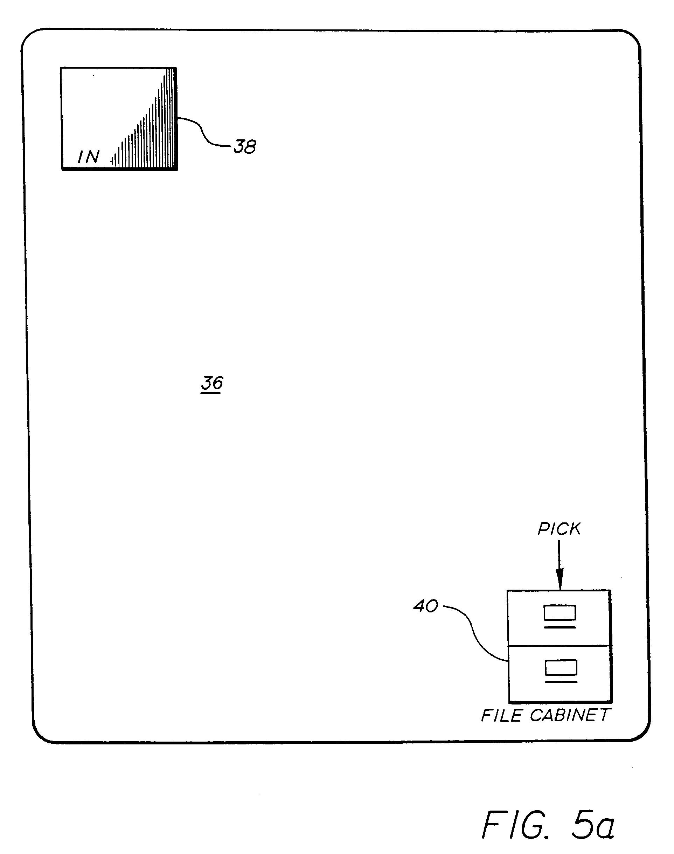

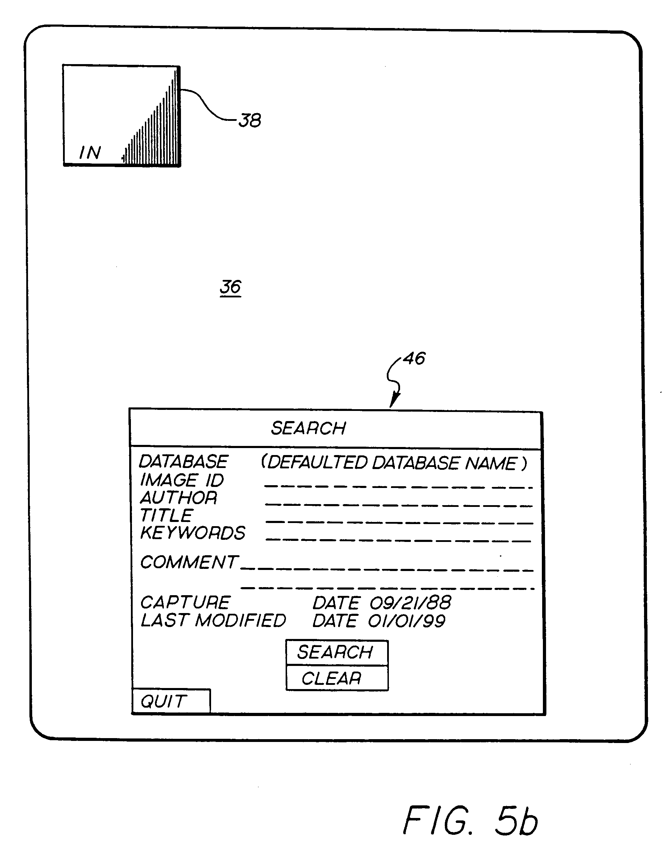

In order to retrieve an image from a database, the user selects the file cabinet icon 40 during the display of the user's system desk 36 as shown in Figure 5a. Selection of the file cabinet 40 is by the user operating an end of the stylus 14 in a touch and lift manner at the position on the tablet 16 which corresponds to the screen position of the file cabinet icon 40. Upon such touching and lifting of the stylus, the processor displays a "search form" on the user's system desk 36 through the display unit 18. As shown in Figure 5b, the search form 46 has fields similar to the "store form" 44. The "Database" field is automatically completed by the processor 22 with the name of a default database such as the database associated with the multi-window screen program. The user inserts the logical identification name or any portion thereof of the desired image in the "image id" field by writing with the stylus 14 or typing on the keyboard 12 with the keyboard cursor positioned in the "Image Id" field. The author and title of the desired document are in a similar manner user inserted in the respective fields on the search form 46. Key words to perform the search are user selected and written/typed into the proper field. The user may also insert text in the "comment" field to provide further criteria for the search. The user provided information in the comment field is used to perform a random text search in the database designated in the "database" field.

If the user makes a mistake such as misspelling a word or name in the search form 46, he may use the eraser end 28 of a stylus 14 to remove the mistake written by the writing end 30 of the stylus. Otherwise, the user may select the "clear" menu pick by a touch and lift operation of the stylus 14 on the tablet 16 position corresponding to the screen position of the menu pick. In response to this menu pick, the processor 22 clears all the user inserted information from the search form 46 and provides a "clean" search form 46.

If the user decides that a search is no longer desired, he may touch and lift an end of the stylus 14 on the tablet position corresponding to the "quit" menu selection. This causes the processor 22 to remove the "search form" 46 from the screen and display the desk view (Figure 3).

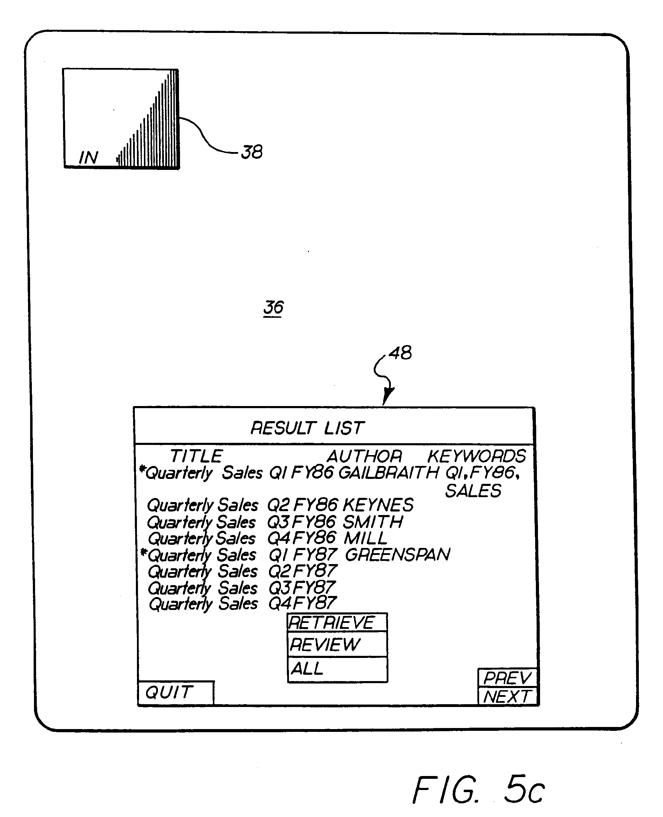

To proceed with the search after completing the search form 46, the user selects the "search" menu selection by touching and lifting an end of the stylus 14 on the corresponding tablet position. In response to selection of the "search" menu pick, the processor 22 generates a query with the user designated information on the search form 46. The query is passed to an application which processes the query on the user designated database. The application generates a result list which is transferred back through the communications network manager to the user's workstation 10 which displays the resutl list 48 on the desk view as shown in Figure 5c.

The result list 48 indicates all images in the designated database which satisfy the criteria provided by the user on the "search form" 46. The result list 48 may be more than one page long and thus may be viewed page by page with the "prev" and "next" menu picks (Figure 5c). To make a selection of either of these menu picks, the user operates the stylus 14 in the touch and lift manner on the corresponding tablet position. In order for a user to view a listed image, the user marks an asterisk or similar indicator next to the desired listed image title with the stylus writing tip end 30 or keyboard 12 and keyboard cursor. Alternatively, the user may select all listed images by selecting the "all" menu pick by touching and lifting the stylus 14 on the tablet 16 accordingly.

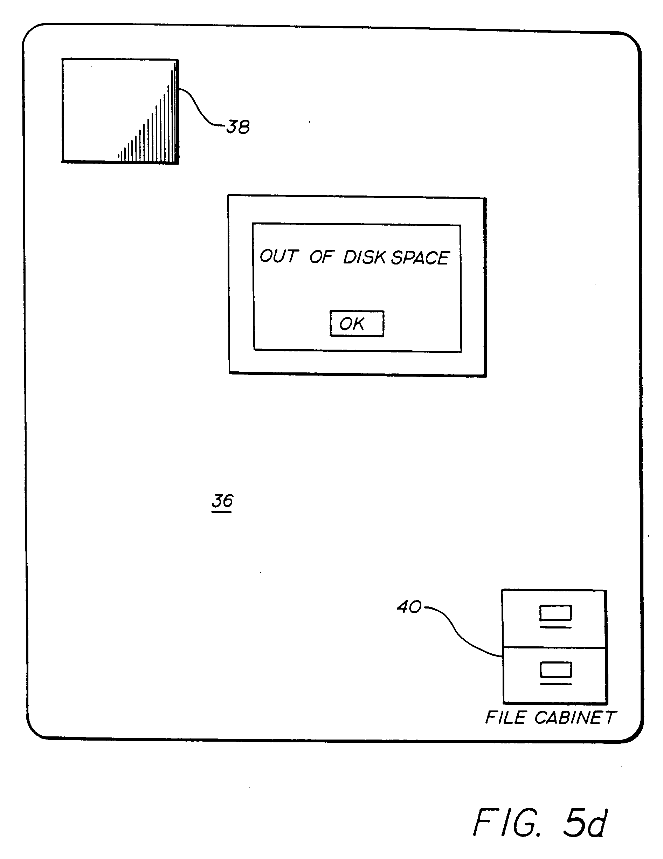

Thereafter, a user selection of the "retrieve" or the "review" menu selection will provide the selected images to the user in stamp or full-screen view form, respectively. Under the "review" menu selection, the processor 22 presents the selected images one by one in a full-screen view, in result list order. For each full screen view of a selected image, the user is provided with the menu selection of either "retrieve" to provide a stamp 34 of the currently displayed document in the In-box 38 on the user's system desk 36, "drop" to remove the indication of the image from the result list and present a full screen view of the next selected image, or "quit" to return to the result list screen view shown in Figure 5c. Under the "retrieve" menu selection from the result list screen view, the processor 22 provides a generation of a stamp 34 for each of the user selected images and delivers the stamps 34 to the In-box on the user's system desk 36, in result list order, until no available disk space remains in system 20. If disk space becomes unavailable, an error message is provided in the desk view as shown in Figure. 5d. The error message after being read may be permanently removed from the desk view by the user touching and lifting a stylus end on the "O.K." menu pick of the screen view as shown in Figure 5d.

With the exception of operating the stylus 14, the above is generally accomplished by know routines in the art for processing the search form 46 and manipulating the result list 48 according to user instruction. Each of the menu selections (i.e. "retrive", "review", "all", "prev", "next", "quit") are supported by associated routines to accomplish the respective function (i.e. paging, marking or screen view change, etc.). After the user is finished with the search form 46 or result list 48 screen views, the processor 22 provides a display of the desk screen view with the stamps 34 and file cabinet 40 in the position in which the user last left them and with new stamps of any retrieved documents in the In-box 38. Thereafter, the user is able to move stamps 34 as desired by the touch and move operation of the stylus 14 and annotate documents of stamps 34 upon selection of the stamp with the touch and lift operation of an end of the stylus.

## Claims

1. In a data processing system (20) comprising a processor (22) programmed with a windowing program and an annotation program, a display (18) coupled to the processor displaying views generated during execution of a program including a screen view (31) having a window (32) when executing at least the windowing program, and an annotation input device (14) coupled to the processor (22), the processor (22) is characterized by:
in response to a first input from the input device (14) while executing the windowing program, beginning execution of the annotation program and capturing a screen image of the screen view (31) currently being displayed on the display (18) as a separate annotatable image;
in response to a second input from the input device (14), while the annotation program is running, annotating said annotatable image;
upon completion of annotating the annotatable image, in response to a third input, storing the annotatable image with any annotations made;
making a reduced image (34) of the annotatable image, the reduced image (34) containing recognizable and distinguishable details of the annotatable image, the reduced image (34) of each annotatable image thus being unique; and
storing the reduced image (34).

2. The system as claimed in claim 1 characterized in that the processor (22) stops performance of all programs currently executed by the processor (22) and saves the state of the stopped programs in response to the first input and resumes execution of the stopped programs in response to the third input.

3. The system as claimed in claim 1 further comprising a database storing the annotatable image.

4. The system as claimed in claim 3 characterized in that the annotation routine is capable of storing images in the database and retrieving images from the database to form images which are annotatable during running of the annotation program.

5. The system as claimed in claim 4 characterized in that the annotation routine generates a file cabinet icon (40), the annotation program responding to predefined stylus strokes performed with respect to the icon (40) by moving user selected images relative to the database.

6. The system as claimed in claim 1 or 5 characterized in that the annotation input device (14) includes a stylus.

7. The system as claimed in claim 6 characterized in that the windows (32) are overlapping in the screen view (31).

8. A method of annotating displayed information in a data processing system (20) comprising a processor (22) running, as a primary task, a windowing program, an electronic display (18) coupled to the processor (22) displaying, in a full screen view (31), a window view and an annotation input device (14) coupled to the processor (22), characterized by
(a) displaying at least two windows (32) on the screen to form a screen view (31);
(b) providing an annotation input to the system (20);
(c) in response to the annotation input beginning execution of an annotation program;
(d) capturing a screen image of the screen view (31) currently being displayed on the display (18) as a separate annotatable image;
(e) annotating the annotatable image;
(f) upon completion of annotation, storing the annotatable image with any annotations made;
(g) making a reduced image (34) of the annotatable image, the reduced image (34) containing recognizable and distinguishable details of the annotatable image, the reduced image (34) of each annotatable image thus being unique; and
(h) storing the reduced image (34).

9. The method according to claim 8 and further including stopping the running of said windowing environment while saving the state of all programs being executed at the time of stopping in response to said input and upon completion of annotation terminating the execution of said annotation program and resuming execution of said programs which were being executed at the time of stopping in response to said input.

10. The method according to claim 9 wherein the annotation input device (14) includes a stylus.

11. The method according to claim 10 wherein the windows (32) are overlapping in the screen view (31).

12. The method according to claim 11 further comprising a database storing the annotatable image.

13. The method according to claim 12 wherein the annotation program is capable of storing images in the database and retrieving images from the database to form images which are annotatable during running of the annotation program.

14. The method according to claim 13 wherein said annotation program generates a file cabinet icon (40), the annotation program responding to predefined stylus strokes performed with respect to the icon (40) by moving user selected images relative to the database.

## Patentansprüche

1. Datenverarbeitungssystem (20) mit einem Prozessor (22), der mit einem Fensterprogramm und einem Annotationsprogramm programmiert ist, einer mit dem Prozessor gekoppelten Anzeigevorrichtung (18) zum Anzeigen von bei der Ausführung eines Programms generierten Darstellungen mit einer Bildschirmdarstellung (31) mit einem Fenster (32) bei der Ausführung wenigstens des Fensterprogramms, und einer mit dem Prozessor (22) gekoppelten Annotations-Eingabevorrichtung (14),
wobei der Prozessor (22) dadurch **gekennzeichnet** ist, daß
- er in Abhängigkeit von einer von der Eingabevorrichtung (14) kommenden ersten Eingabe während der Ausführung des Fensterpogramms die Ausführung des Annotationsprogramms beginnt und ein Bildschirmbild der an der Anzeigevorrichtung (18) aktuell angezeigten Bildschirmdarstellung (31) als getrenntes beschriftbares Bild erfaßt,
- in Abhängigkeit von einer zweiten von der Eingabevorrichtung (14) kommenden Eingabe während der Ausführung des Annotationsprogramms das genannte beschriftbare Bild beschriftet,
- nach Durchführung der Beschriftung des beschriftbaren Bildes in Abhängigkeit von einer dritten Eingabe das beschriftbare Bild mit vorgenommenen Beschriftungen speichert,
- aus dem beschriftbaren Bild ein verkleinertes Bild (34) macht, das erkennbare und unterscheidbare Einzelheiten des beschriftbaren Bildes enthält, so daß das verkleinerte Bild (34) jedes beschriftbaren Bildes somit eindeutig ist, und
- das verkleinerte Bild (34) speichert.

2. System nach Anspruch 1,
dadurch **gekennzeichnet**, daß
der Prozessor (22) in Abhängigkeit von der ersten Eingabe die Durchführung aller aktuell vom Prozessor (22) ausgeführten Programme stoppt und den Zustand der gestoppten Programme sichert und in Abhängigkeit von der dritten Eingabe die Ausführung der gestoppten Programme wiederaufnimmt.

3. System nach Anspruch 1, ferner mit einer Datenbasis, welche das beschriftbare Bild speichert.

4. System nach Anspruch 3,
dadurch **gekennzeichnet**, daß
die Annotationsroutine in der Lage ist, Bilder in der Datenbasis zu speichern und Bilder aus der Datenbasis zu holen, um Bilder zu formen, die während der Ausführung des Annotationsprogramms beschriftbar sind.

5. System nach Anspruch 4,
dadurch **gekennzeichnet**, daß
die Annotationsroutine ein Dateischrank-Ikon (40) generiert, wobei das Annotationsprogramm auf vordefinierte Griffeleingaben, die am Ikon (40) vorgenommen werden, durch Bewegen von vom Benutzer ausgewählten Bildern in bezug auf die Datenbasis anspricht.

6. System nach Anspruch 1 oder 5,
dadurch **gekennzeichnet**, daß
die Annotations-Eingabevorrichtung (14) einen Griffel umfaßt.

7. System nach Anspruch 6,
dadurch **gekennzeichnet**, daß
sich die Fenster (32) in der Bildschirmdarstellung (31) überlappen.

8. Verfahren zum Beschriften angezeigter Informationen in einem Datenverarbeitungssystem (20) mit einem Prozessor (22), der als Hauptaufgabe ein Fensterprogramm ausführt, einer mit dem Prozessor (22) gekoppelten elektronischen Anzeigevorrichtung (18), die in einer Vollbildschirmdarstellung (31) eine Fensterdarstellung anzeigt, und mit einer mit dem Prozessor (22) gekoppelten Annotations-Eingabevorrichtung (14),
**gekennzeichnet** durch
a) das Anzeigen von wenigstens zwei Fenstern (32) auf dem Bildschirm zur Bildung einer Bildschirmdarstellung (31),
b) das Bereitstellen einer Annotationseingabe an das System (20),
c) in Abhängigkeit von der Annotationseingabe das Starten der Ausführung eines Annotationsprogramms,
d) das Erfassen eines Bildschirmbildes der aktuell an der Anzeigevorrichtung (18) angezeigten Bildschirmdarstellung (31) als getrenntes beschriftbares Bild,
e) das Beschriften des beschriftbaren Bildes,
f) nach Durchführung der Beschriftung das Speichern des beschriftbaren Bildes mit allen vorgenommenen Beschriftungen;
g) das Formen eines verkleinerten Bildes (34) des beschriftbaren Bildes, wobei das verkleinerte Bild (34) erkennbare und unterscheidbare Einzelheiten des beschriftbaren Bildes enthält, wodurch das verkleinerte Bild (34) jedes beschriftbaren Bildes somit eindeutig ist, und
h) das Speichern des verkleinerten Bildes (34).

9. Verfahren nach Anspruch 8, ferner mit
- dem Stoppen der Ausführung der genannten Fenster-Betriebsart während der Sicherung des Zustands aller zum Zeitpunkt des Stops ausgeführten Programme in Abhängigkeit von der genannten Eingabe, und
- nach Durchführung der Beschriftung das zu Ende Führen des genannten Annotationsprogramms und die Wiederaufnahme der Ausführung der genannten Programme, die zum Zeitpunkt des Stops ausgeführt wurden, in Abhängigkeit von der genannten Eingabe.

10. Verfahren nach Anspruch 9,
bei dem die Annotations-Eingabevorrichtung (14) einen Griffel umfaßt.

11. Verfahren nach Anspruch 10,
bei dem sich die Fenster (32) in der Bildschirmdarstellung (31) überlappen.

12. Verfahren nach Anspruch 11,
ferner mit einer das beschriftbare Bild speichernden Datenbasis.

13. Verfahren nach Anspruch 12,
bei dem das Annotationsprogramm in der Lage ist, Bilder in der Datenbasis zu speichern und Bilder aus der Datenbasis zu holen, um Bilder zu formen, die während der Ausführung des Annotationsprogramms beschriftbar sind.

14. Verfahren nach Anspruch 13,
bei dem das genannte Annotationsprogramm ein Dateischrank-Ikon (40) generiert, wobei das Annotationsprogramm auf vordefinierte Griffeleingaben, die am Ikon (40) vorgenommen werden, durch Bewegen von vom Benutzer ausgewählten Bildern in bezug auf die Datenbasis anspricht.

## Revendications

1. Système informatique (20) comprenant un processeur (22) programmé par un programme de fenêtrage et par un programme d'annotation, un affichage (18) connecté au processeur affichant des visualisations générées au cours de l'exécution d'un programme comprenant une visualisation d'écran (31) présentant une fenêtre (32) lorsqu'au moins le programme de fenêtrage est exécuté, et un dispositif d'entrée d'annotation (14) connecté au processeur (22), dans lequel le processeur (22) est caractérisé par :
le lancement, en réponse à une première entrée provenant du dispositif d'entrée (14) pendant l'exécution du programme de fenêtrage, de l'exécution du programme d'annotation et la saisie d'une image d'écran de la visualisation d'écran (31) actuellement affichée sur l'affichage (18) comme image annotable séparée;
l'annotation de ladite image annotable en réponse à une deuxième entrée provenant du dispositif d'entrée (14), pendant l'exécution du programme d'annotation;
l'enregistrement, à l'achèvement de l'annotation de l'image annotable, en réponse à une troisième entrée, de l'image annotable avec toutes les annotations effectuées;
la réalisation d'une image réduite (34) de l'image annotable, l'image réduite (34) contenant des détails visibles et reconnaissables de l'image annotable, l'image réduite (34) de chaque image annotable étant ainsi particulière; et
l'enregistrement de l'image réduite (34).

2. Système selon la revendication 1 caractérisé en ce que le processeur (22) arrête le déroulement de tous les programmes en cours d'exécution par le processeur (22) et sauvegarde l'état des programmes arrêtés en réponse à la première entrée et reprend l'exécution des programmes arrêtés en réponse à la troisième entrée.

3. Système selon la revendication 1 comprenant en outre une base de données enregistrant l'image annotable.

4. Système selon la revendication 3 caractérisé en ce que la routine d'annotation est capable d'enregistrer des images dans la base de données et d'aller chercher des images dans la base de données pour former des images qui sont annotables au cours de l'exécution du programme d'annotation.

5. Système selon la revendication 4 caractérisé en ce que la routine d'annotation génère une icône de classeur de fichiers (40), le programme d'annotation répondant à des pressions prédéfinies d'un stylet exercées par rapport à l'icône (40) en déplaçant les images sélectionnées par l'utilisateur par rapport à la base de données.

6. Système selon la revendication 1 ou 5 caractérisé en ce que le dispositif d'entrée d'annotation (14) comprend un stylet.

7. Système selon la revendication 6 caractérisé en ce que les fenêtres (32) se chevauchent dans la visualisation d'écran (31).

8. Procédé d'annotation d'une information affichée dans un système informatique (20) comprenant un processeur (22) exécutant, comme tâche principale, un programme de fenêtrage, un affichage électronique (18) connecté au processeur (22) affichant, en visualisation sur tout l'écran (31), une visualisation à fenêtre et un dispositif d'entrée d'annotation (14) connecté au processeur (22), caractérisé par
(a) l'affichage d'au moins deux fenêtres (32) sur l'écran pour former la visualisation d'écran (31);
(b) la transmission d'une entrée d'annotation au système (20);
(c) le lancement de l'exécution d'un programme d'annotation en réponse à l'entrée d'annotation;
(d) la saisie d'une image d'écran de la visualisation d'écran (31) actuellement affichée sur l'affichage (18) comme image annotable séparée;
(e) l'annotation de l'image annotable;
(f) l'enregistrement, à l'achèvement de l'annotation, de l'image annotable avec toutes les annotations effectuées;
(g) la réalisation d'une image réduite (34) de l'image annotable, l'image réduite (34) contenant les détails visibles et reconnaissables de l'image annotable, l'image réduite (34) de chaque image annotable étant ainsi particulière; et
(h) l'enregistrement de l'image réduite (34).

9. Procédé selon la revendication 8 comprenant de plus l'arrêt du déroulement dudit contexte de fenêtrage en même temps que la sauvegarde de l'état de tous les programmes en cours d'exécution lors de l'arrêt en réponse à ladite entrée et l'interruption, à l'achèvement de l'annotation, de l'exécution dudit programme d'annotation et la reprise de l'exécution desdits programmes qui étaient en cours d'exécution lors de l'arrêt en réponse à ladite entrée.

10. Procédé selon la revendication 9 dans lequel le dispositif d'entrée d'annotation (14) comprend un stylet.

11. Procédé selon la revendication 10 dans lequel les fenêtres (32) se chevauchent dans la visualisation d'écran (31).

12. Procédé selon la revendication 11 comprenant en outre une base de données enregistrant l'image annotable.

13. Procédé selon la revendication 12 dans lequel le programme d'annotation est capable d'enregistrer des images dans la base de données et d'aller chercher des images dans la base de données pour former des images qui sont annotables au cours de l'exécution du programme d'annotation.

14. Procédé selon la revendication 13 dans lequel ledit programme d'annotation génère une icône de classeur de fichiers (40), le programme d'annotation répondant à des pressions prédéfinies du stylet exercées par rapport à l'icône (40) en déplaçant les images sélectionnées par l'utilisateur par rapport à la base de données.
